# EUROPEAN PATENT APPLICATION

(11) **EP 3 040 847 A1**
(43) Date of publication of application: **06.07.2016**
(21) Application number: 15197238.7
(22) Date of filing: 01.12.2015
(51) Int. Cl.: G06F 3/12

(54) **INFORMATION PROCESSING APPARATUS, CONTROL METHOD, AND RECORDING MEDIUM**

(30) Priority: 09.12.2014 JP 2014249437
(71) Applicant: Canon Kabushiki Kaisha, Tokyo 146-8501 (JP)
(72) Inventor: SUZUKI, Shinya, Tokyo, Tokyo 146-8501 (JP)
(74) Representative: TBK

(57) **Abstract**

An information processing apparatus installs a printer driver and validates a setting value of a specific function of the printer driver, which is present in a saving region provided by an operating system, based on a setting file including information indicating customization contents of the printer driver. When a print setting screen of the printer driver is opened, the function of the printer driver is customized by performing processing according to a prohibition rule applied to the validated setting value of the specific function in the saving region and a setting value of another function described in a definition file.

## Description

### BACKGROUND OF THE INVENTION

### Field of the Invention

The present invention relates to a technique capable of controlling a printer driver.

### Description of the Related Art

A technique capable of partly limiting a function of a printer driver has been conventionally known.

As discussed in Japanese Patent Application Laid-Open No. 2005-235173, there is a conventional technique for allowing a user to customize a printer driver by changing a whole driver set of printer drivers.

However, the environment of a printing system of an operating system (OS) may not permit to change the driver set. For example, electronic signature is a representative technique capable of realizing the above-mentioned restriction. More specifically, electronic signature is allocated to a driver set. If the driver set is changed in a manner discussed in Japanese Patent Application Laid-Open No. 2005-235173, verification of the electronic signature by the OS will be failed. The operations of the printer driver cannot be guaranteed. As a result, customizing the printer driver by changing the driver set has been conventionally difficult.

### SUMMARY OF THE INVENTION

The present invention is directed to a printing system that is capable of realizing customization of a printer driver by performing processing according to a prohibition rule even in an environment where changing a driver set is restricted, of resulting in excellent user-friendliness.

According to a first aspect of the present invention, there is provided an information processing apparatus as specified in claims 1 to 5. According to a second aspect of the present invention, there is provided a control method as specified in claims 6 to 10. According to a third aspect of the present invention, there is provided a non-transitory recording medium storing a program that causes a computer to perform a method as specified in clam 11.

Further features of the present invention will become apparent from the following description of exemplary embodiments with reference to the attached drawings.

### BRIEF DESCRIPTION OF THE DRAWINGS

Fig. 1 is a block diagram illustrating a hardware and software configuration of a computer system.
Fig. 2 is a block diagram illustrating a configuration of a print processing system.
Fig. 3 illustrates a part of a print setting definition file (GPD).
Fig. 4 is a block diagram illustrating an example of an installation package of a printer driver.
Fig. 5 is a flowchart illustrating processing that can be performed by an installer.
Fig. 6 is an Extensible Markup Language (XML) that indicates an example of an installation setting file.
Fig. 7 illustrates a part of a user interface (UI) that can be displayed by the installer.
Fig. 8 is an XML that indicates another example of the installation setting file in which a new prohibition rule is described.
Fig. 9 is a flowchart illustrating processing that can be performed by a print setting edit module.
Fig. 10 illustrates a part of a printer property UI that displays administrator setting information.

### DESCRIPTION OF THE EMBODIMENTS

In Microsoft (registered trademark) Windows (registered trademark) 8, the V4 printer driver has been introduced, which is a novel printer driver capable of operating in a new architecture. The V4 printer driver is an architecture serving as a successor of the Extensible Markup Language (XML) Paper Specification (XPS) printer driver, which has been provided as the architecture of the V3 printer driver. The V4 printer driver uses the print path that uses an XPS-based document.

In the above-mentioned XPS print path, the information to be used to determine a style of a print product is print function information described in an XML format that is referred to as "PrintCapabilities" and print setting information described in the XML format that is referred to as "PrintTicket." The V4 printer driver includes a print setting definition file "Generic Printer Description (GPD)" that is capable of defining print setting functions of printer drivers. When the above-mentioned printer driver including the GPD is installed on the OS, a print setting change function using the PrintCapabilities or the PrintTicket can be provided to a user.

The print setting change function includes a "prohibition rule" function controlling print settings that cannot be simultaneously performed by a device. For example, in a case where a printer driver is applicable to a device that cannot perform "two-sided print" processing on a "postcard" size paper, the printer driver is required to perform a control in such a way to prevent a user from simultaneously setting these settings. Further, in a case where a system introduced in a company is operable based on a printer driver in performing print processing, a system administrator may restrict the usage of a specific print setting if it is not desired to be freely set by a general user. For example, the system administrator may not permit a user to set "one-sided print" and be willing to force the user to select "always two-sided setting" in every printing operation. In such a case, the printer driver is required to perform a control to prevent any item other than "two-sided setting" from being set.

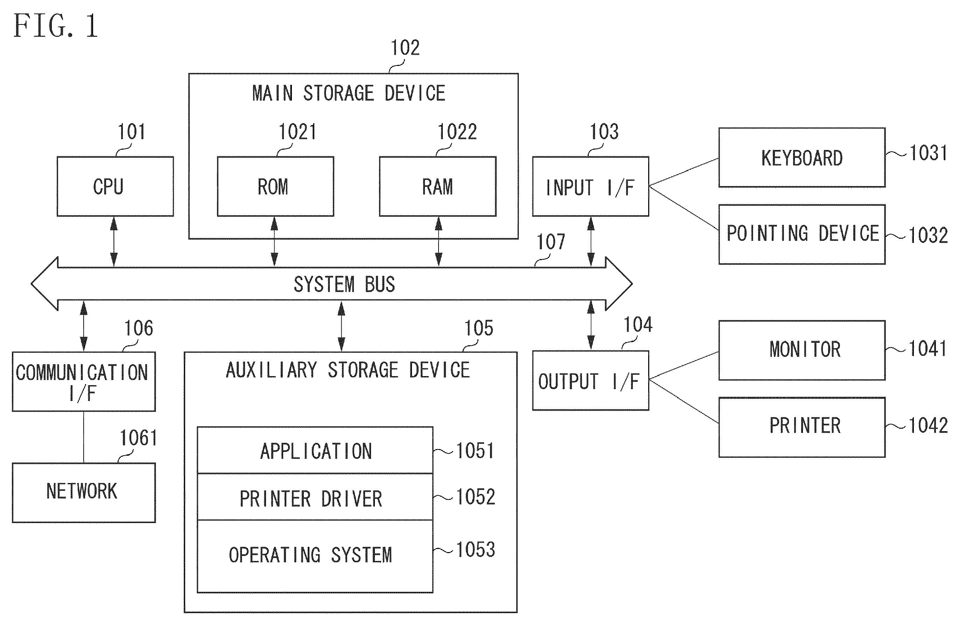

Hereinafter, a first exemplary embodiment of the present invention will be described in detail below. Fig. 1 is a block diagram illustrating a hardware and software configuration of an information processing apparatus 100 according to an exemplary embodiment of the present invention.

A central processing unit (CPU) 101 can control various operations to be performed by the apparatus according to programs stored in a read only memory (ROM) 1021, a random access memory (RAM) 1022 of a main storage device 102, or an auxiliary storage device 105. The CPU 101 can use the RAM 1022 as a work area when the CPU 101 performs various processing. To realize processing of each component according to the present exemplary embodiment, the CPU 101 performs processing based on each program read into the RAM 1022. The auxiliary storage device 105 stores an application 1051, a printer driver 1052, and an operating system (OS) 1053. The printer driver 1052 can instruct a device having a print function to perform a print operation. A keyboard 1031 and a pointing device 1032, which is represented by a mouse or a touch panel, are input devices. Each input device enables a user to input various instructions, via an input interface (I/F) 103, to a computer. An output I/F 104 is an interface that can output data to an external device. The output I/F 104 can output various data to output devices, such as a monitor 1041 and a printer 1042. The printer 1042 is connected via a directly connected local input/output (I/O) to the output I/F104. Alternatively, the printer 1042 may be connected thereto via a network 1061 accessible via a communication I/F 106. Further, a common data system bus 107 enables the interfaces and the modules to transmit and receive various data.

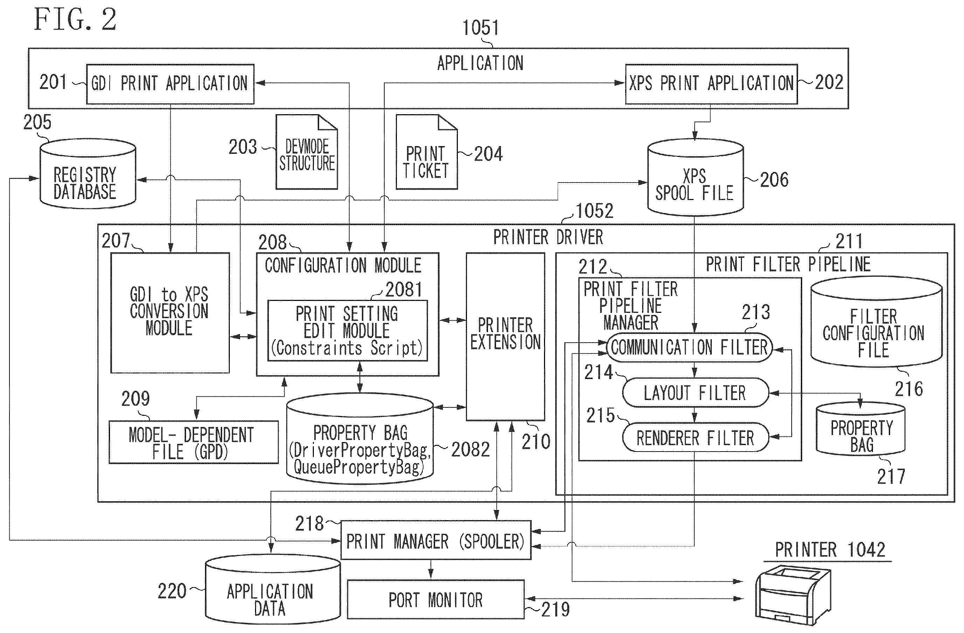

In addition, the CPU 101 performs various processing based on the programs stored in the auxiliary storage device 105 to realize a software configuration of the information processing apparatus 100 illustrated in Fig. 2 and processing in each step of a flowchart described below.

Fig. 2 is a block diagram illustrating a configuration of a driver printing system. The driver printing system is a system that can use the XPS file format as spool data and can perform a print operation.
The driver printing system is operating on the OS 1053. A print manager 218, a GDI to XPS conversion module 207, a filter pipeline manager 212, and a port monitor 219 are modules included in the operating system 1053. GDI is a graphics component that can generate a print image for the printer. The GDI to XPS conversion module 207 is capable of converting each data drawn by the GDI into XPS data.
The filter pipeline manager 212 is a module that can manage filter print processing, which is a characteristic feature of the XPS print path. The port monitor 219 can control communications between the print manager 218 and the printer driver 1052 when the print manager 218 accesses a device. The printer driver 1052 can perform print processing via the port monitor 219. The GDI to XPS conversion module 207, a configuration module 208, and the filter pipeline manager 212 are included in the printer driver 1052 as modules that can be provided from the operating system 1053 to the printer driver 1052. The configuration module 208 can edit the print setting information with a print setting edit module 2081 that the printer driver 1052 provides. The print setting edit module 2081 is described in a script language, which is referred to as "Constraint Script", and can edit the print setting information by using a property bag 2082 in which the data stored by the printer driver 1052 is provided.
The property bag 2082 indicates a saving region in which a data group usable as printer model-dependent information, which is referred to as DriverPropertyBag (hereinafter, referred to as "DPB") and a data group associated with a print queue, which is referred to as "QueuePropertyBag (hereinafter, referred to as "QPB")" are stored. The DPB and the QPB are saving regions that can be provided by the OS 1053.

The DPB is dependent on a printer model and is present in a driver package. After the printer driver is installed, the data group can be stored as read-only data in a specific region of the OS.

The QPB is usable when an XML definition file of a Key-Value pair is registered in the OS 1053. A predetermined authority is required to edit the Value. Further, describing a definition of the QPB is also feasible in the GPD, which is the print setting definition file.

Each filter of the printer driver 1052 and the filter pipeline manager 212 is usually stored as the printer driver 1052 in the auxiliary storage device 105 illustrated in Fig. 1. The applications stored as the application 1051 in the auxiliary storage device 105 illustrated in Fig. 1 includes a GDI print application 201 and an XPS print application 202. A user can operate an input apparatus, such as the keyboard 1031 or the pointing device 1032, which is represented by the mouse or the touch panel, to instruct the GDI print application 201 (hereinafter referred to as "GDI application") or the XPS print application 202 (hereinafter referred to as "XPS application") displayed on the monitor 1041 (i.e., an output device) to perform print processing. The print processing includes three processes of selecting a printer, creating print settings, and converting drawing data, which are performed in a predetermined order.

First, the user selects the printer 1042 to be used in a printing operation. Selecting the printer 1042 is equal to selecting the printer driver 1052 corresponding to the printer 1042 that performs the printing operation. In selecting the printer driver 1052, a print queue (not illustrated) is usable.

Next, the user creates print settings. The print settings include, as a first step, causing the application 1051 to secure a memory region dedicated to the print settings in the RAM 1022 and, as a second step, causing the application 1051 to call the configuration module 208 of the printer driver 1052. The application 1051 creates print setting data and stores the created print setting data in the dedicated memory region of the RAM 1022.

The GDI application 201 uses a binary DEVMODE structure 203 as the print setting data. The XPS application 202 uses a PrintTicket 204 described in the XML of markup language. The DEVMODE structure 203 includes a default region that the OS defines and an expanded region that the printer driver uniquely defines. The PrintTicket 204 is the print setting information described in the XML format. The default region and the expanded region are discriminated in description relating to a namespace. The DEVMODE structure 203 or the PrintTicket 204 saves the print settings. The application directly rewrites the values to change the print settings.

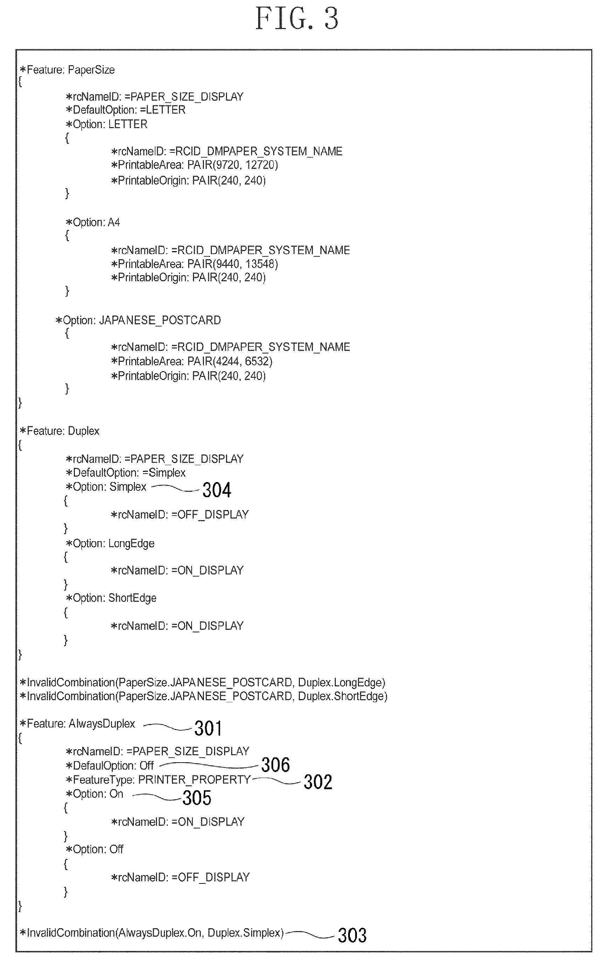

The print setting data includes model unique information. Therefore, the configuration module 208 uses a model-dependent file 209 to create the print setting data. The model-dependent file 209 is the print setting definition file, which is referred to as GPD, and is described in a text-based format as illustrated in Fig. 3. Further, the model-dependent file 209 can include a description relating to a definition of the "prohibition rule." For example, a function of applying a prohibition rule can be provided to a user by describing setting values of set print settings that cannot be simultaneously set in an item of "InvalidCombination", according to a description method defined by Microsoft (registered trademark). The print settings that a user cannot simultaneously set are, for example, items that cannot be provided as device functions and items that are intentionally prohibited from being used by the user.

The printer driver 1052 includes a method for realizing the "prohibition rule" as mentioned above and a method for realizing the "prohibition rule" by using the print setting edit module 2081. In the present exemplary embodiment, the prohibition rule that can be realized by the "InvalidCombination" of the GPD will be described in detail below.

Further, the print setting definition file (i.e., the model-dependent file 209) can include a description relating to performances of a device and the definition of the QPB associated with a print queue. In the present exemplary embodiment, information registered in the QPB is referred to as "administrator setting information." For example, a method for describing the administrator setting information in the GPD includes describing PRINTER_PROPERTY 302 in an item FeatureType of AlwaysDuplex 301, which indicates "always two-sided setting", as illustrated in Fig. 3. By completing the above-mentioned description, a function name "AlwaysDuplex 301" and the default setting value thereof can be registered in the QPB. In performing processing according to the prohibition rule, the setting value of the AlwaysDuplex 301 is determined with reference to the setting value registered in the QPB.

DefaultOption 306 defines a default setting value. According to the example illustrated in Fig. 3, the default setting value of the DefaultOption 306 is Off. Therefore, the default setting value of the AlwaysDuplex 301 is Off (invalid).

Further, the item FeatureType includes a description of PRINTER_PROPERTY, which can display options for selecting the item describing PRINTER_PROPERTY for a user having administrator authority. In the present exemplary embodiment, it is assumed that the information processing apparatus employs printer properties (i.e., a function of the OS) as a place to display selectable options of the above-mentioned items to the user having administrator authority.

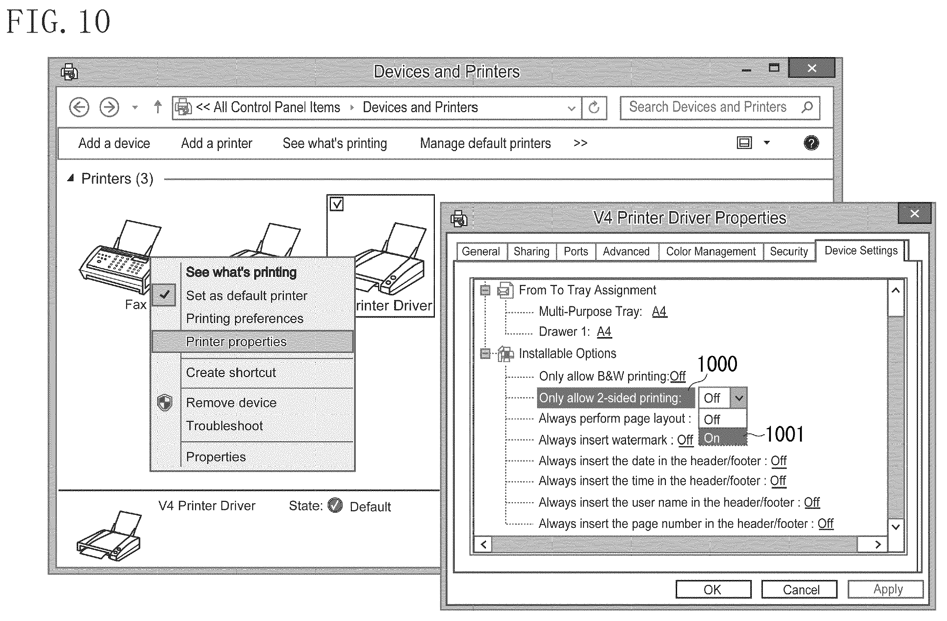

Fig. 10 illustrates a printer properties which has been opened via a path of "device" - "printer folder", in which an operation to select a desired option is performed in a state where selectable options of the item describing PRINTER_PROPERTY are displayed. In the example illustrated in Fig. 10, "Only allow 2-sided printing" 1000 is a function of providing the AlwaysDuplex function to a user. If the option of the "Only allow 2-sided printing" 1000 is switched to "On" (see 1001), the setting value of the QPB can be changed and the function of "always two-sided setting" can be realized.

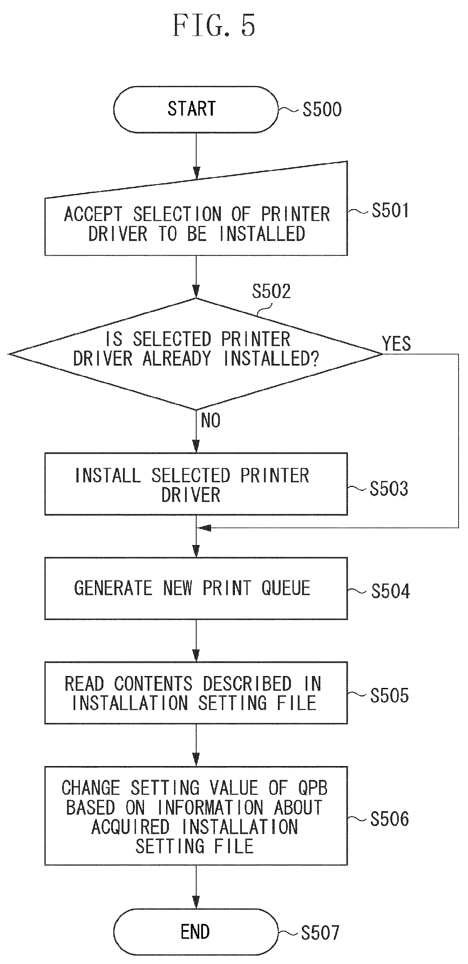

A method for defining the prohibition rule using the GPD will be described in detail below. In Fig. 3, InvalidCombination 303 includes a description about the prohibition rule applied to two setting values, i.e., the setting value On 305 of the AlwaysDuplex (i.e., the administrator setting information) and the setting value Simplex 304 (indicating "one-sided print") of the Duplex in the print settings. The configuration can realize processing of the prohibition rule applied to a setting value of a specific function in the print settings registered in the QPB and a setting value of another function in the print settings described in the GPD based on the description of the GPD. According to the example illustrated in Fig. 3, the default setting value of the AlwaysDuplex is Off. Therefore, the information processing apparatus does not perform the processing relating to the prohibition rule illustrated in the InvalidCombination 303 until the setting value of the QPB is changed in processing to be performed in step S506 illustrated in Fig. 5.

Further, the feature Duplex relates to items settable as setting items of a print setting screen of the printer driver 1052. On the other hand, the AlwaysDuplex 301 relates to items that cannot be set as the setting items of the print setting screen of the printer driver 1052.

The dedicated settings dependent on the printer 1042, including the above-mentioned prohibition rule information, are settable via a user interface of a printer extension 210. The printer driver 1052 changes the settings that depends on the printer 1042 for the DEVMODE structure 203 or the PrintTicket 204 according to the settings accepted via the user interface. The PrintTicket 204 includes print settings described in the XML format. Therefore, it is easy for the XPS application 202 to directly change and rewrite all setting values. Alternatively, the user interface of the printer extension 210 is usable to change the settings. The printer extension 210 is an example of the printer driver 1052 and installed as another application that can be discriminated from the printer driver 1052.

The information processing apparatus creates print settings for each print of a document. On the other hand, the printer extension 210 can save settings, such as settings of an optional device of the printer 1042 or environment settings for each user, in a registry database 205 of the operating system. In a case where the registry database 205 cannot be used, the printer extension 210 saves the settings in an application data 220. The print manager 218 of the operating system saves the default values of the print settings, which have been set by a user, in the registry database 205. The registry database 205 and the application data 220 can be saved in the auxiliary storage device 105.

If the print settings are finalized, the user instructs the application to perform print processing. If the user instructs the GDI application 201 to perform print processing, the GDI application 201 transmits drawing data to the GDI to XPS conversion module 207 (i.e., a module of the OS 1053). The GDI to XPS conversion module 207 creates an XPS spool file 206. In this case, the GDI to XPS conversion module 207 calls the configuration module 208 and converts the print settings from the DEVMODE structure 203 to the PrintTicket 204. In the conversion, the configuration module 208 uses the print setting edit module 2081.

On the other hand, two methods are employable if the user instructs the XPS application 202 to perform print processing. In one method, the XPS application 202 generates an XPS file. In another method, the operating system generates an XPS file according to a drawing command from the XPS application 202. In both methods, the XPS spool file 206 is generated during a printing operation.

A print filter pipeline 211 takes over the processing if the XPS spool file 206 has been generated according to a print instruction from the GDI application 201 or the XPS application 202. The print filter pipeline 211 is a mechanism in which print processing with a plurality of filters is performed. The print filter pipeline 211 includes a filter configuration file 216 that can control the number of filters and the processing order of each filter. In the present exemplary embodiment, the plurality of filters of the print filter pipeline 211 are a communication filter 213 that has a mechanism for communicating with the printer 1042, a layout filter 214 that has a mechanism for performing bookbinding and stamp related layout processing, and a renderer filter 215 that has a mechanism for rendering and converting the XPS spool file 206 into Page Description Language (PDL) data. The PDL data can be managed by the print manager 218 that manages the schedule of the print processing. Print jobs can be successively registered in the queue. If the printer 1042 is in a print-ready state, the print jobs is transmitted successively to the printer 1042 via the port monitor 219 according to the order registered in the queue. Converting the print data received from the application into the PDL data as mentioned above is a main role of the printer driver.

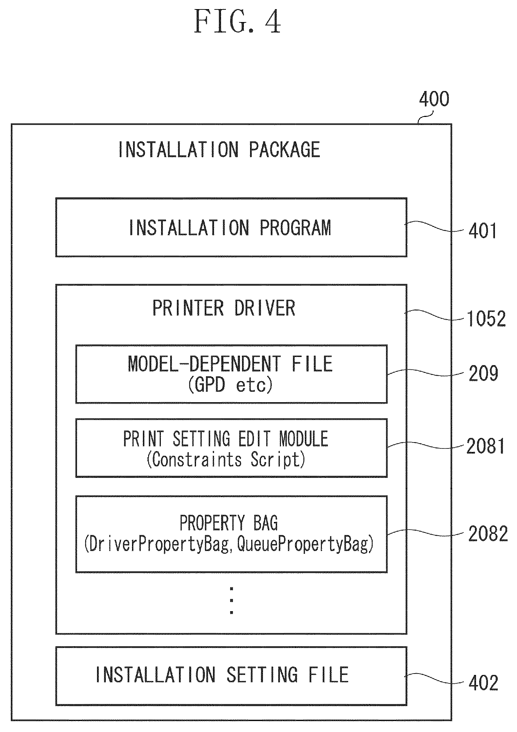

Next, installation of the printer driver will be described with reference to Fig. 4. Fig. 4 is a software block diagram illustrating an installation package 400 of the printer driver.

The installation package 400 includes an installation program 401 and an installation setting file 402, which are packaged together with the printer driver 1052. The installation program 401 includes a description relating to printer driver registration to the OS 1053. Executing the installation program 401 enables a user to install the printer driver 1052. The printer driver 1052 includes the model-dependent file 209, the print setting edit module 2081, and the property bag 2082 (e.g., the DPB and the QPB). Installing the printer driver 1052 on the OS 1053 can provide the printing system illustrated in Fig. 2.

The installation program 401 can be loaded into the RAM 1022 and can be executed by the CPU 101. In the present exemplary embodiment, the installation program 401 is referred to as an installer. The installation setting file 402 includes information indicating how to customize the printer driver 1052 (i.e., customization contents), which can be used when the printer driver 1052 is installed. In the present exemplary embodiment, a constrained print setting screen can be provided to a user by changing the setting values of the QPB based on the customization contents described in the installation setting file 402.

Hereinafter, an exemplary way that the system administrator provides a constrained customization driver to users will be described in detail below.

Each printer vendor usually provides the installation package 400 to the system administrator via the internet or a dedicated CD-ROM. Subsequently, the system administrator describes a print setting forcing means to be applied to the installation setting file 402. The system administrator provides the installation package 400, which includes the edited installation setting file 402, to a user. The user installs the printer driver 1052 by using the installation package 400, so that a print queue is generated that corresponds to the printer driver 1052 reflecting the print settings forced by the system administrator. Through the above-mentioned processing, the customization driver can be provided to users. Further, in a client and server environment, it is feasible to install the installation package 400 including the edited installation setting file 402 on a server. In this case, the installation package 400 can be distributed to a client that is used by a user, by using a point and print function.

Next, processing that can be performed by the installation program 401 will be described with reference to a flowchart illustrated in Fig. 5.

First, in step S500, the installation program 401 starts processing. Hereinafter, processing that can be realized by the installer (i.e., the installation program 401) will be described in detail below.

In step S501, the installer accepts a selection of the printer driver 1052 to be installed on the OS 1053. The installation package 400 according to the present exemplary embodiment includes a plurality of printer drivers corresponding to a plurality of device models. In the present exemplary embodiment, a user selects the printer driver 1052 from the plurality of printer drivers packaged in the installation package 400.

In step S502, the installer determines whether the printer driver 1052 selected in step S501 has been already installed. If the installer determines that the printer driver 1052 has been already installed (YES in step S502), the operation proceeds to step S504. If the installer determines that the printer driver 1052 has not been installed (NO in step S502), the operation proceeds to step S503.

In step S503, the installer installs the printer driver 1052 selected in step S501 on the information processing apparatus 100. If the installation of the printer driver 1052 is completed, each module of the printer driver package is registered to the OS 1053. In this case, the DPB of the property bag 2082 is registered to a region of the OS 1053 that the printer extension 210 or the print setting edit module 2081 can access.

In step S504, the installer generates a new print queue corresponding to the installed printer driver 1052. In this case, the QPB of the property bag 2082 is registered to a region of the OS 1053 that the printer extension 210 or the print setting edit module 2081 can access.

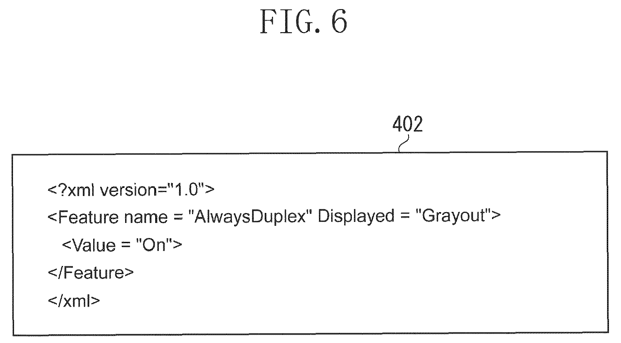

In step S505, the installer reads contents described in the installation setting file 402. Fig. 6 illustrates an example of the installation setting file 402. In the present exemplary embodiment, the installation setting file 402 is described in the XML format. However, any other appropriate text or binary file is usable to describe the installation setting file 402. Further, if the installation setting file 402 is not present, the installer can determine that the contents to be customized are not present and can install the printer driver 1052 as usual. Alternatively, if the installation setting file 402 is not present, the installer can display an error message.

The installation setting file 402 illustrated in Fig. 6 will be described in detail below. In the present exemplary embodiment, for example, the installation setting file 402 defines an XML that includes a description relating to the information about controlling "always two-sided setting." Feature node includes, as Attribute information, Feature name attribute and Displayed attribute. A name of the print setting can be designated as the name attribute and the way that the printer extension 210 displays an item can be designated as Displayed attribute. In the flowchart according to the present exemplary embodiment, the installer saves the name of the print setting and a value of Value node defined in the installation setting file 402 illustrated in Fig. 6.

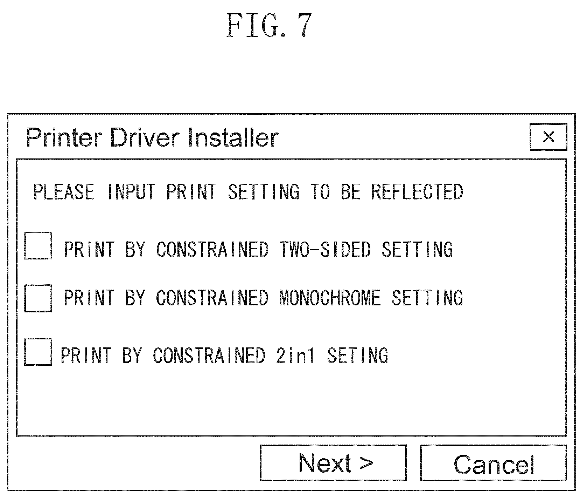

Further, although the installer according to the present exemplary embodiment uses the installation setting file 402, an UI that provides a checkbox (see Fig. 7) can be used while the CPU 101 executes the installation program 401. In this case, it can be configured to accept customization contents input from a user in the installation process of the printer driver.

In step S506, the installer changes the setting value of the QPB corresponding to the print queue generated in step S504 based on the information about the installation setting file 402 acquired in step S505. Through the above-mentioned processing, the installer can customize the print setting screen corresponding to the print queue based on the installation setting file 402. On the other hand, the installer may accept an input via the UI illustrated in Fig. 7, instead of referring to the installation setting file 402. In this case, the installer can change the setting value described in the GPD, which is present in the QPB, based on the contents of the accepted input. Then, the operation proceeds to step S507. The installer terminates the processing of the flowchart illustrated in Fig. 5.

The processing to be performed in step S506 will be described in detail below. In the present exemplary embodiment, the function name "always two-sided setting" and the default value thereof are described in the GPD as illustrated in Fig. 3. The above-mentioned function name and default value are registered to the QPB. According to the default settings, the setting value of "AlwaysDuplex" is Off. Therefore, in step S506, the installer sets (validates) the setting value of "AlwaysDuplex" in the QPB to On (valid) based on information indicating that the setting value of "AlwaysDuplex" (i.e., the content described in the installation setting file 402) should be set to On. As a result, when the print setting screen of the print queue generated in step S504 (i.e., the printer driver installed in step S503) is opened, the information processing apparatus performs processing according to a prohibition rule. More specifically, the setting value "always two-sided setting" (i.e., the definition of "InvalidCombination" described in the GPD) and the setting value "one-sided setting" contradict with each other and cannot be simultaneously set. Therefore, the user cannot designate the one-sided setting.

Through the above-mentioned processing flow, the installer reflects the contents described in the installation setting file 402 to the administrator setting information of the QPB. Therefore, the information processing apparatus can provide a constrained print setting means, in which the user cannot designate the one-sided print because of the presence of the prohibition rule described in the GPD, namely the rule prohibiting the "one-sided print" and the "always two-sided setting" from being simultaneously designated.

As an example method for prohibiting a user from designating the one-sided print in a case where the one-sided print is displayed as one of selectable options on the print setting screen of the printer driver 1052, it is useful to display an "error" message or automatically switch the selection item to another one of the options.
As another example method, it is useful that the information processing apparatus does not display the "one-sided print" as a selectable option on the print setting screen of the printer driver 1052.

Further, if the printer extension 210 has the capability of editing the administrator setting information of the QPB, the administrator setting information described in the XML description of the QPB can be presented to the user. Therefore, the installation setting file 402 can include information necessary to control the printer extension 210 to display the setting item of the QPB. For example, the installation setting file 402 includes a description about administrator information indicating a gray-out display of information relating to "AlwaysDuplex" (the value of "Displayed" attribute illustrated in Fig. 6 is Grayout) in the QPB. In this case, when a user opens a printer driver UI, the printer extension 210 reads the information "Grayout" of the "Displayed" attribute illustrated in Fig. 6 and can perform a gray-out display of the display item of the QPB administrator information indicating "always two-sided setting." According to the above-mentioned configuration, the printer extension 210 cannot change the setting of "always two-sided setting."

As mentioned above, the installer according to the present exemplary embodiment can rewrite the setting value of the QPB in such a way as to provide the constrained print setting screen to each user.

A second exemplary embodiment of the present invention will be described in detail below. In the first exemplary embodiment, it is necessary to describe the definition of each prohibition rule beforehand in the GPD. Therefore, it is difficult to perform constrained print setting in such a way that the printer vendor cannot presume beforehand. For example, in a case where the system administrator permits each user to use a specific paper size only, it is difficult to describe a related prohibition rule beforehand in the GPD. Therefore, the present exemplary embodiment provides a mechanism for installing a constrained customization driver that can be flexibly used by the system administrator, by using a means capable of realizing a "prohibition rule" with the print setting edit module 2081, as described in detail below.

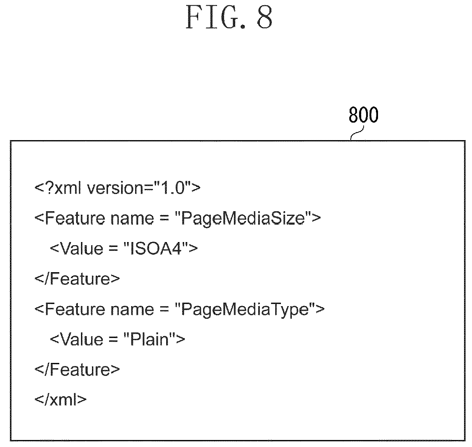

In the present exemplary embodiment, the installer reads an installation setting file 800 (see Fig. 8) in which a new prohibition rule is described and saves the prohibition rule information in the QPB. Then, the print setting edit module 2081 edits the PrintTicket 204 based on the prohibition rule information added to the QPB to provide a constrained printer driver, as be described in detail below.

First, the installation setting file 800 illustrated in Fig. 8 according to the present exemplary embodiment will be described in detail below. The installation setting file 800 includes a description about print setting items to be forced to a user and a setting value thereof. According to the example illustrated in Fig. 8, the user is forced to always set the paper size "A4" and the paper type "plain paper." The installation setting file 800 defines "ISOA4" representing the paper size "A4" as a value of "PageMediaSize" representing the paper size and defines "Plain" representing the paper type "plain paper" as a value of "PageMediaType" representing the paper type. It is desired that the items described in the installation setting file 800 are Feature name and Option name that can be used for PrintCapabilities.

Processing to be performed by the installer is similar to the processing illustrated in Fig. 5 described in the first exemplary embodiment and therefore redundant description thereof will be avoided. However, the present exemplary embodiment is different from the first exemplary embodiment in that when the installer reads the contents described in the installation setting file 800 in step S505, the installer acquires the XML information in a String format. Then, the installer directly sets the String format value acquired in step S505 to the QPB of the print queue generated in step S504.

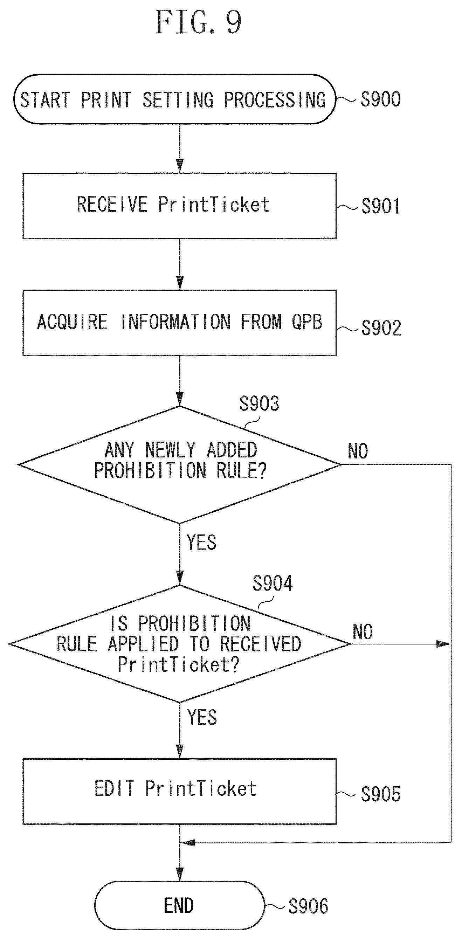

Next, processing that can be performed by the print setting edit module 2081 in a print setting operation to provide the above-mentioned constrained customization driver will be described in detail below with reference to a flowchart illustrated in Fig. 9. All of the illustrated processing can be performed by the print setting edit module 2081. The print setting edit module 2081 can be loaded into the RAM 1022 and can be executed by the CPU 101.

First in step S900, the print setting edit module 2081 starts print setting edit processing. The print setting edit processing is processing to be executed when a user opens a print setting UI via the application or when PTMergeAndValidate (API) is called to determine appropriateness of the PrintTicket. If the OS 1053 calls the print setting edit module 2081 to start the operation thereof, then in step S901, the print setting edit module 2081 receives the PrintTicket including present print setting information.

In step S902, the print setting edit module 2081 acquires information that the installer has stored in the QPB.

In step S903, the print setting edit module 2081 confirms whether the acquired information about the QPB includes any prohibition rule information newly added by the installer. In the present exemplary embodiment, the print setting edit module 2081 determines whether the XML information described in Fig. 8 can be acquired, in the String format, from the QPB. If there is not any new prohibition rule (NO in step S903), the operation proceeds to step S906 and the print setting edit module 2081 terminates the print setting edit processing illustrated in Fig. 9. If the print setting edit module 2081 determines that there is a new prohibition rule (YES in step S903), the operation proceeds to step S904.

In step S904, the print setting edit module 2081 determines whether the new prohibition rule information described in the QPB causes any contradiction against the received PrintTicket. For example, in a case where the received PrintTicket designates the paper size "A4" and the paper type "plain paper", prohibition processing is not processed. Therefore, the operation proceeds to step S906 (NO in step S904), the print setting edit module 2081 terminates the print setting edit processing. On the other hand, for example, if the received PrintTicket designates a paper size "Letter", the designated paper size causes a contradiction against the paper size "A4" defined in the installation setting file 800 (YES in step S904), the operation proceeds to step S905. In step S905, the print setting edit module 2081 edits the setting value from "Letter" to "A4" with respect to the paper size in the received PrintTicket. Then, the operation proceeds to step S906 and the print setting edit module 2081 terminates the print setting edit processing.

Through the above-mentioned processing, the print setting edit module 2081 can perform processing based new prohibition rule information having been set by the installer and can edit the PrintTicket 204. Therefore, a constrained customization driver can be provided to each user.

### (Other exemplary embodiment)

The present invention can be also realized through the following processing. The processing includes supplying a program capable of realizing at least one of the functions described in the above-mentioned exemplary embodiments to a system or an apparatus via a network or an appropriate storage medium and causing at least one processor of a computer provided in the system or the apparatus to read and execute the program. Further, the present invention can be realized by a circuit (e.g., application-specific integrated circuit (ASIC)) that is capable of realizing at least one of the above-mentioned functions.

The present invention can provide a printing system that is excellent in user-friendliness. More specifically, the information processing apparatus according to the present invention enables a user to customize a printer driver by performing processing according to a prohibition rule even in a case where changing the driver set is restricted.

Embodiment(s) of the present invention can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)™), a flash memory device, a memory card, and the like.

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

An information processing apparatus installs a printer driver and validates a setting value of a specific function of the printer driver, which is present in a saving region provided by an operating system, based on a setting file including information indicating customization contents of the printer driver. When a print setting screen of the printer driver is opened, the function of the printer driver is customized by performing processing according to a prohibition rule applied to the validated setting value of the specific function in the saving region and a setting value of another function described in a definition file.

## Claims

1. An information processing apparatus, comprising:
an installation means configured to install a printer driver; and
a validation means configured to validate a setting value of a specific function of the printer driver, which is present in a saving region provided by an operating system, based on a setting file including information indicating customization contents of the printer driver,
wherein the setting value of the specific function of the printer driver is registered in the saving region based on a definition file that defines a print setting function of the printer driver, and
wherein the function of the printer driver is customized by performing processing according to a prohibition rule applied to the setting value of the specific function in the saving region, validated by the validation means, and a setting value of another function described in the definition file.

2. The information processing apparatus according to claim 1, wherein the processing according to the prohibition rule applied to the setting value of the specific function in the saving region and the setting value of another function described in the definition file is performed based on a description of the definition file.

3. The information processing apparatus according to either one of claim 1 or claim 2, wherein the installation means is configured to accept an input of customization contents of the printer driver from a user in an installation process of the printer driver, and the validation means is configured to change a setting value described in the definition file, which is present in the saving region, based on the input accepted by the installation means.

4. The information processing apparatus according to any one of claims 1 to 3, wherein, if, in the definition file, a value "invalid" is defined as a default setting value of the specific function and the setting value of the specific function is not validated by the validation means, the processing according to the prohibition rule is not performed.

5. The information processing apparatus according to any one of claims 1 to 4, further comprising:
a saving means configured to save prohibition rule information in which a setting value to be forced to a user is defined, which is included in the setting file, in the saving region; and
a customization means configured to customize a function of the printer driver by performing the processing based on the prohibition rule information, if a print setting screen of the printer driver is opened.

6. A control method, comprising the steps of:
installing a printer driver; and
validating a setting value of a specific function of the printer driver, which is present in a saving region provided by an operating system, based on a setting file including information indicating customization contents of the printer driver,
wherein the setting value of the specific function of the printer driver is registered in the saving region based on a definition file that defines a print setting function of the printer driver, and
wherein the function of the printer driver is customized by performing processing according to a prohibition rule applied to the setting value of the specific function, in the saving region, validated in the validating step, and a setting value of another function described in the definition file.

7. The control method according to claim 6, wherein the processing according to the prohibition rule applied to the setting value of the specific function in the saving region and the setting value of another function described in the definition file is performed based on a description of the definition file.

8. The control method according to either one of claim 6 or claim 7,
wherein, in the installing step, an input of the customization contents of the printer driver is accepted from a user while installing the printer driver, and
wherein, in the validating step, a setting value, which is present in the saving region and is described in the definition file, is changed based on the input accepted in the installing step.

9. The control method according to any one of claims 6 to 8, wherein, if, in the definition file, a value "invalid" is defined as a default setting value of the specific function and the setting value of the specific function is not validated in the validating step, the processing according to the prohibition rule is not performed.

10. The control method according to any one of claims 6 to 9, further comprising the steps of:
saving prohibition rule information in which a setting value to be forced to a user is defined, which is included in the setting file, in the saving region; and
customizing a function of the printer driver by performing the processing based on the prohibition rule information, if a print setting screen of the printer driver is opened.

11. A non-transitory recording medium storing a program that causes a computer to perform a method, the method comprising the steps of:
installing a printer driver; and
validating a setting value of a specific function of the printer driver, which is present in a saving region provided by an operating system, based on a setting file including information indicating customization contents of the printer driver,
wherein the setting value of the specific function of the printer driver is registered in the saving region based on a definition file that defines a print setting function of the printer driver, and
wherein the function of the printer driver is customized by performing processing according to a prohibition rule applied to the setting value of the specific function, in the saving region, validated in the validating step, and a setting value of another function described in the definition file.
